# DEMANDE DE BREVET EUROPEEN

(11) **EP 0 970 603 A1**
(43) Date de publication de la demande: **12.01.2000**
(21) Numéro de dépôt: 99401665.7
(22) Date de dépôt: 05.07.1999
(51) Int. Cl.: A01K 1/015

(54) **Litières et asséchants de litière à base d'hydrorétenteurs**

(30) Priorité: 08.07.1998 FR 9808741
(71) Demandeur: Bio Stim, 22230 Merdrignac (FR)
(72) Inventeur: Guillermou, Marc, 35190 La Baussaime (FR)
(74) Mandataire: Nevant, Marc

(57) **Abrégé**

L'invention concerne des litières et asséchants de litière à base d'hydrorétenteurs.

Ces litières et asséchants de litière permettent notamment de limiter la pollution par l'épandage des fumiers issus d'élevage.

## Description

La présente invention concerne le domaine de l'agriculture. Plus précisément, l'invention concerne des litières et asséchants de litière comprenant des hydrorétenteurs.

Les éleveurs utilisent de plus en plus de litière et d'asséchant de litière, que ce soit en élevage industriel ou conventionnel.

Il se pose donc le problème de la pollution occasionnée par l'épandage de plus en plus important des fumiers issus d'élevage.

Parallèlement, le bien-être des animaux prend de plus en plus d'importance dans les élevages intensifs.

La présente invention vise donc notamment à limiter la pollution par l'épandage des fumiers issus d'élevage et à améliorer le bien-être des animaux.

Ces aspects, et d'autres qui apparaîtront à la lecture de la demande, sont accomplis, selon la présente invention, au moyen de litières et asséchants de litière comprenant un (des) hydrorétenteur(s).

Avantageusement, la litière ou l'asséchant de litière selon l'invention comprend également de l'argile, un végétal broyé et un désinfectant.

Par hydrorétenteur, on entend dans la présente demande tout polymère superabsorbant.

Ces matériaux d'origine naturelle ou synthétique se sont considérablement développés ces vingt dernières années. Ils sont plus généralement connus sous l'abréviation : S.A.P. ("superabsorbent polymer") et déjà utilisés dans de nombreux domaines. On citera plus particulièrement celui de l'hygiène corporelle : des S.A.P. interviennent dans l'élaboration d'articles absorbants types couches-culottes, serviettes périodiques, papier, compresses, etc.

De tels polymères, mis en contact avec l'eau, forment un gel, physique ou chimique, appelé également hydrogel, capable d'absorber des quantités importantes d'eau dans son réseau macromoléculaire.

Des polymères superabsorbants (S.A.P.) d'origine naturelle, utilisables dans le cadre de la présente invention, sont par exemple ceux décrits dans les brevets US-A-3 589 364, US-A-1 693 890, US-A-3 846 404, US-A-3 935 099 et US-A-3 661 815 (amidon greffé polyacrylonitrile) ainsi que dans le brevet FR-A-2 305 452 (amidon greffé acide acrylique).

Des polymères superabsorbants (S.A.P.), d'origine synthétique, utilisables dans le cadre de la présente invention, sont par exemple, des polymères formés de motifs acryliques ; (méth)acrylate ; méthacrylate d'hydroxyéthyle ; alcool vinylique; acrylamide ; acétate de vinyle ; acrylate d'hydroxyéthyle ; monoacrylate de diéthylèneglycol ; monométhacrylate de diéthylèneglycol; acrylate de 2-hydroxypropyle ; méthacrylate de 2-hydroxypropyle ; acrylate de 3-hydroxypropyle ; méthacrylate de 3-hydroxypropyle ; monométhacrylate de dipropylèneglycol ; vinylpyrrolidone ; méthacrylamide ; N-propylacrylamide ; N-isopropylméthacrylamide ; N-méthylacrylamide ; et/ou N-2-hydroxyéthylméthacrylamide ; ainsi que des hydrogels de polyuréthanne, formés de polymères légèrement réticulés de prépolymères terminés par un isocyanate qui sont les produits de réaction d'un poly(alkylèneoxy)polyol avec un diisocyanate organique légèrement réticulé avec de l'eau ou une polyamine organique, comme décrit dans le brevet US-A-3 939 105 ; des copolymères de monomères à insaturation éthylénique d'acrylates et de méthacrylates hydroxyalkyliques et d'acrylates et méthacrylates d'alcoxyalkylèneglycols, comme décrit dans le brevet US-A-4 038 264 ainsi que d'autres polymères superabsorbants (S.A.P.) connus de l'homme de l'art.

On préférera les polymères superabsorbants (S.A.P.) d'origine synthétique.

Les polymères superabsorbants (S.A.P.), selon l'invention, sont obtenus par réticulation de macromolécules et se présentent sous forme d'écailles, de poudres, de films, de fibres, de sphères ou "perles".

Plus généralement, l'invention sera avantageusement mise en oeuvre avec des particules de polymère superabsorbant de forme sphérique et dont le diamètre est compris en général entre 50 et 500 µm et de préférence entre 100 et 250 µm.

De manière avantageuse, l'hydrorétenteur (ou le mélange d'hydrorétenteurs) représente environ 1 % en poids à environ 30 % en poids, de préférence environ 2 % en poids à environ 15 % en poids, de la litière ou de l'asséchant de litière.

De préférence, la litière ou l'asséchant de litière comprend aussi :
- une argile, comme par exemple de la sépiolite, de la bentonite, une zéolite, ou un mélange de ces composés ;
- un végétal broyé, notamment des fines de copeaux, de la sphaigne, du son broyé, des pailles broyées, ou un mélange de ces composés ;
- un désinfectant, de préférence d'origine minérale, comme par exemple le sulfate de cuivre.

Généralement, on utilise de 1 à 95 % en poids de végétal broyé, de 1 à 60 % en poids d'argile et de 0,1 à 5 % en poids de désinfectant, par rapport au poids de la litière ou de l'asséchant de litière.

Plus précisément, la litière selon l'invention comprend avantageusement de 40 à 95 % en poids de végétal broyé et de 1 à 20 % en poids d'argile. L'asséchant de litière selon l'invention comprend lui avantageusement de 1 à 40 % en poids de végétal broyé et de 20 à 60 % en poids d'argile.

La litière ou l'asséchant de litière selon l'invention peut également contenir un ou plusieurs composés choisis parmi :
- des essences de plantes aromatiques comme par exemple les huiles essentielles ;
- des levures, notamment les levures alimentaires naturelles ou chimiques, par exemple les levures boulangères ou les levures issues de traitements naturels de betteraves sucrières ;
- des bactéries, notamment les bactéries telluriques, par exemple des bactéries rizophériques comme celles du genre *Pseudomonas ;* autotrophes comme celles des genres *Nitrosomonas* ou *Nitrobacter ;* ou semi-autotrophes, comme celle du genre *Azobacter;*
- des algues, notamment des algues calcaires marines, comme par exemple le lithothamne des Glénans.

Généralement, on utilise respectivement environ 0 à 5 % en poids d'essences de plantes aromatiques, environ 0 à 80 % en poids d'algues, environ 0 à 5 % en poids de bactéries et/ou jusqu'à environ 5 % en poids de levures, par rapport au poids de la litière ou de l'asséchant de litière.

Selon un mode de réalisation préféré, l'asséchant de litière selon l'invention comprend de 20 à 70 % en poids d'algues.

La litière ou l'asséchant de litière selon l'invention peut également comprendre de la sciure hygiénisée, du sulfate de calcium, un désinfectant (tel que le Tridocarban®), un bactéricide ou un fongicide (notamment de l'acide citrique) et/ou un phosphate naturel.

Dans ce cas, on utilise généralement de 0 à 20 % en poids, par rapport au poids de la litière ou de l'asséchant de litière, de chacun de ces constituants.

La litière ou l'asséchant de litière selon l'invention peut être préparé en mélangeant les différents constituants, selon les techniques bien connues de l'homme du métier, puis en conditionnant le mélange résultant en sac afin d'obtenir un produit spécifique enrichi en hydrorétenteur(s).

La litière ou l'asséchant de litière ainsi obtenu est un produit naturel très efficace qui peut être utilisé dans tout type d'élevage en agriculture.

La litière ou l'asséchant de litière selon l'invention permet donc avantageusement :
* d'améliorer l'efficacité des litières et asséchants de litière ;
* d'économiser les quantités de paille ou de copeaux utilisés en élevage ;
* de limiter la pollution par l'épandage des fumiers issus d'élevage ;
* de rendre les élevages plus sains, plus propres ;
* d'améliorer le bien-être des animaux.

Les caractéristiques de l'invention seront mieux comprises à la lecture des exemples ci-après, donnés à titre illustratif. Dans ces exemples, (i) les pourcentages indiqués sont des pourcentages en poids et (ii) on utilise indifféremment un superabsorbant de type polyacrylamide (commercialisé par la Société SNF S.A. sous le nom PR 3005 BIO) ou de type polyacrylate de sodium réticulé (commercialisé par la Société Chemische Fabrik Stockhausen GmbH sous le nom FAVOR SXM 3950).

### Exemple 1

On prépare un asséchant de litière en mélangeant les ingrédients suivants :

| | |
|---|---|
| Superabsorbant | 1 % |
| Lithotamne des Glénans | 50 % |
| Essences de plantes | 0,3 % |
| Sépiolite | 28,4 % |
| Bentonite | 15 % |
| Sulfate de cuivre | 0,3 % |
| Son broyé | 5 % |

### Exemple 2

On prépare une litière en mélangeant les ingrédients suivants :

| | |
|---|---|
| Fines de copeaux | 70 % |
| Paille broyée | 20 % |
| Sulfate de cuivre | 1 % |
| Sépiolite | 3 % |
| Bentonite | 3 % |
| Superabsorbant | 3 % |

## Revendications

1. Litière ou asséchant de litière, qui comprend un ou plusieurs hydrorétenteurs, une argile, un végétal broyé et un désinfectant.

2. Litière selon la revendication 1, qui comprend de 1 à 95 % en poids, de préférence de 40 à 95 % en poids de végétal broyé, par rapport au poids de la litière.

3. Litière selon la revendication 1 ou 2, qui comprend de 1 à 60 % en poids, de préférence de 1 à 20 % en poids d'argile, par rapport au poids de la litière.

4. Asséchant de litière selon la revendication 1, qui comprend de 1 à 40 % en poids de végétal broyé, par rapport au poids de l'asséchant de litière.

5. Asséchant de litière selon la revendication 1 ou 4, qui comprend de 20 à 60 % en poids d'argile, par rapport au poids de l'asséchant de litière.

6. Litière ou asséchant de litière selon l'une des revendications 1 à 5, qui comprend de 0,1 à 5 % en poids de désinfectant, par rapport au poids de la litière ou de l'asséchant de litière.

7. Litière ou asséchant de litière selon l'une des revendications 1 à 6, qui comprend en outre un ou plusieurs composés choisis parmi :
- des essences de plantes aromatiques,
- des levures,
- des bactéries,
- des algues.

8. Asséchant de litière selon la revendication 7, qui comprend de 20 à 70 % en poids d'algues par rapport au poids de l'asséchant de litière.

9. Litière ou asséchant de litière selon l'une des revendications 1 à 8, dans lequel l'hydrorétenteur (les hydrorétenteurs) est (sont) un (des) polymère(s) superabsorbant(s) d'origine synthétique.

10. Litière ou asséchant de litière selon la revendication 9, dans lequel le(s) polymère(s) superabsorbant(s) a (ont) un diamètre de particule compris entre 50 et 500 µm.

11. Litière ou asséchant de litière selon l'une des revendications 1 à 10 dans lequel l'hydrorétenteur (les hydrorétenteurs) représente(nt) environ 1 % à environ 30 % en poids, de la litière ou de l'asséchant de litière.

12. Utilisation d'un hydrorétenteur pour la préparation d'une litière ou d'un asséchant de litière destiné à l'élevage agricole.
